# EUROPEAN PATENT APPLICATION

(11) **EP 1 491 776 A1**
(43) Date of publication of application: **29.12.2004**
(21) Application number: 03014066.9
(22) Date of filing: 23.06.2003
(51) Int. Cl.: F16B 23/00

(54) **Screw with combined-recess driving socket**

(71) Applicant: Lin, Chao Wei, Kuan Miao Town, Tainan County (TW)
(72) Inventor: Lin, Chao Wei, Kuan Miao Town, Tainan County (TW)
(74) Representative: Kirschner, Klaus Dieter, Dipl.-Phys.

(57) **Abstract**

A screw includes a head portion (1) with a driving socket formed thereon. The driving socket has a bottom portion, a square recess (44) and four fan-shaped recesses (40,41,42,43). The square recess (44) is defined by four vertical walls (440,441,442,443). The four substantially vertical walls (440,441,442,443) taper inwards the bottom portion (46) of the socket and are separated to one other by four corner gaps respectively. The four fan-shaped recesses (40,41,42,43) extend respectively and outwardly from each of the corner gaps and are integral with the square recess (44). Each fan-shaped recess (40,41,42,43) is defined by two outward walls (47,48) and an outer wall (49), and the two outward wall (47,48) and the outer wall (49) taper toward the bottom portion (46) of the socket.

## Description

The present invention relates generally to a screw, and more particularly to a screw with combined-recess driving socket which permits the screw to be driven by various types of screw drivers (driver bits) such as slot type drivers, Phillips type drivers, square type drivers, Pozi type drivers and Phillips-square (cross-square) type drivers.

Conventional screws or bolts include a various types of heads such as countersunk, oval, pan and truss, which have driving sockets or recesses formed thereon for being driven by screw drivers. In the prior art, there are at least five simple types of driving sockets as shown in Figures 1, 2, 3, 4 and 5. Figure 1 shows a slot drive recess A; Figure 2 shows a Phillips (cross) drive recess B; Figure 3 shows a cross-square drive recess C; Figure 4 shows a square drive recess D; and Figure 5 shows a Pozi drive recess E. However, the structures of above-mentioned driving sockets have several disadvantages. Firstly, each of these sockets should be driven by its corresponding type of screw driver (driver bit). Secondly, the structures of these sockets cannot stand comparatively large torques due to their structural weakness and uneven pressure distribution. Finally, the loose fit between the driving socket and the screw driver (driver bit) may cause impaired driving socket or broken drive bit.

It is an object of the present invention to provide a screw with a combined-recess driving socket that can withstand comparatively large driving torques with high retention of a drive bit.

It is another object of the present invention to provide a screw with a combined-recess driving socket that can be driven by various types of drive bits.

For achieving this, the invention provides a screw as claimed in claim 1. Advantageous embodiments of the invention are characterized in the sub-claims.

The present invention provides a screw with combined-recess driving socket, which can withstand comparatively large driving torques with high retention of the drive bit and be driven by various types of drive bits such as slot driver bits, Phillips driver bits, square driver bits, Pozi driver bits and Phillips-square driver bits. In addition, the invention also can be driven by its tailor-made drive bit which gives the combined recesses the capacity to withstand high driving torques with minimal drive bit slip or cam-out.

Further objects, features and advantages of the present invention will become apparent from the following detailed description of the invention taken in conjunction with the accompanying drawing wherein like reference numerals designate like elements throughout the several views.

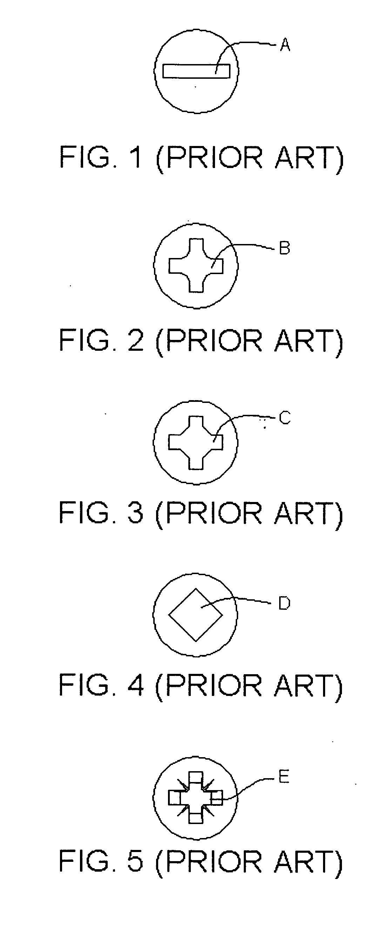

Figure 1 is a top view of a conventional slot drive recess.
Figure 2 is a top view of a conventional Phillips (cross) drive recess.
Figure 3 is a top view of a conventional cross-square drive recess.
Figure 4 is a top view of a conventional square drive recess.
Figure 5 is a top view of a conventional Pozi drive recess.

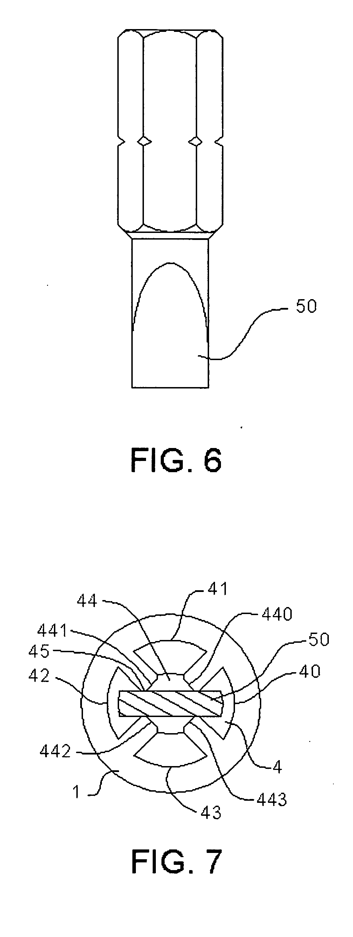

Figure 6 is a side view of a slot drive bit.
Figure 7 is a cross-sectional view of a slot drive bit fitting with the driving socket of the present invention.

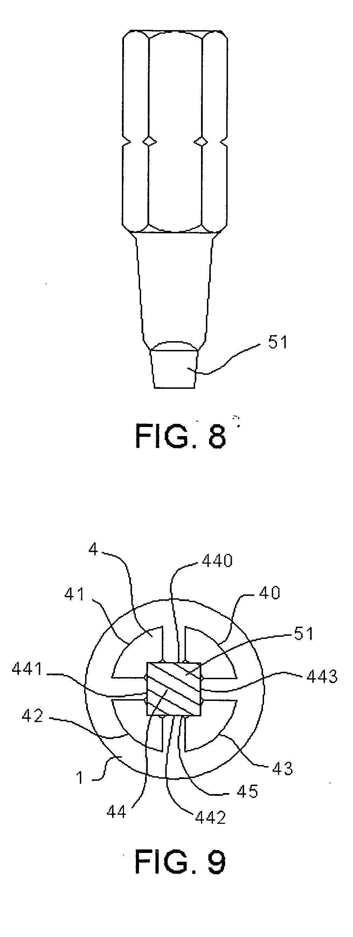

Figure 8 is a side view of a square drive bit.
Figure 9 is a cross-sectional view of a square drive bit fitting with the driving socket of the present invention.

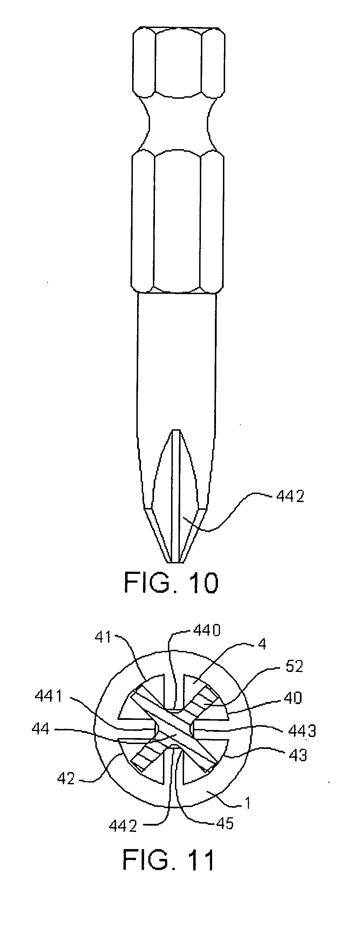

Figure 10 is a side view of a Phillips (cross) drive bit.
Figure 11 is a cross-sectional view of a Phillips (cross) drive bit fitting with the driving socket of the present invention.

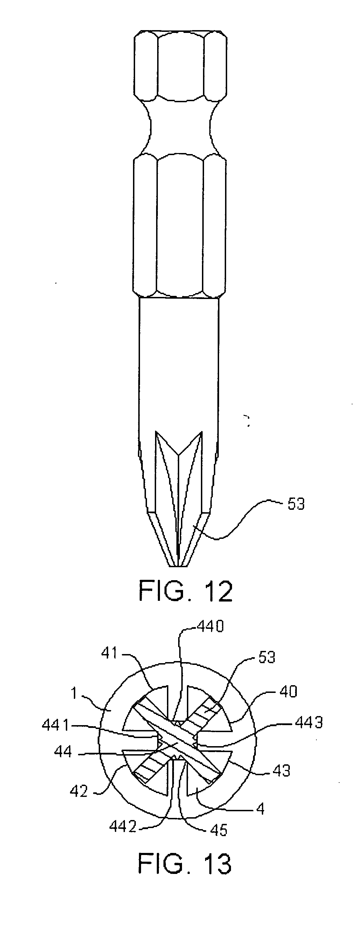

Figure 12 is a side view of a Pozi drive bit.
Figure 13 is a cross-sectional view of a Pozi drive bit fitting with the driving socket of the present invention.

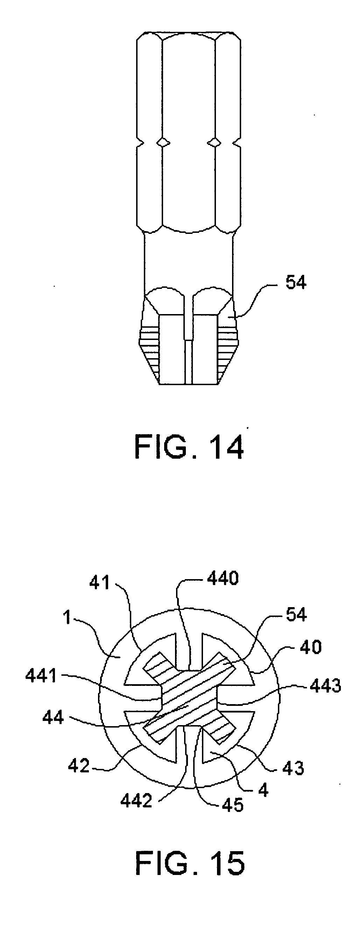

Figure 14 is a side view of a cross-square drive bit.
Figure 15 is a cross-sectional view of a cross-square drive bit fitting with the driving socket of the present invention.

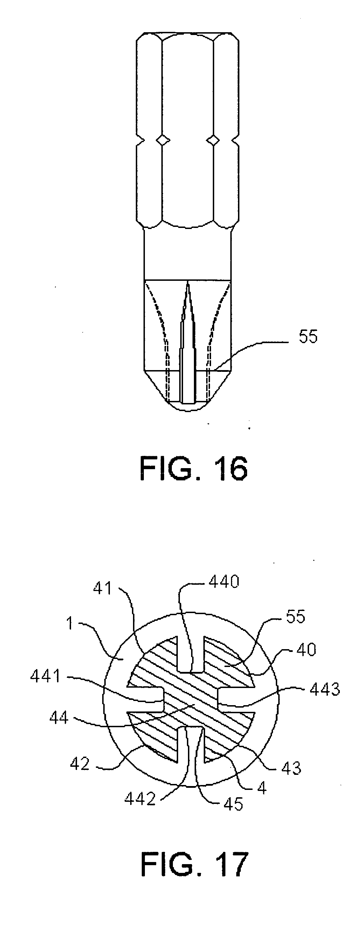

Figure 16 is a side view of a tailor-made drive bit for this combined drive recess.
Figure 17 is a cross-sectional view of the tailor-made drive bit fitting with the driving socket of the present invention.

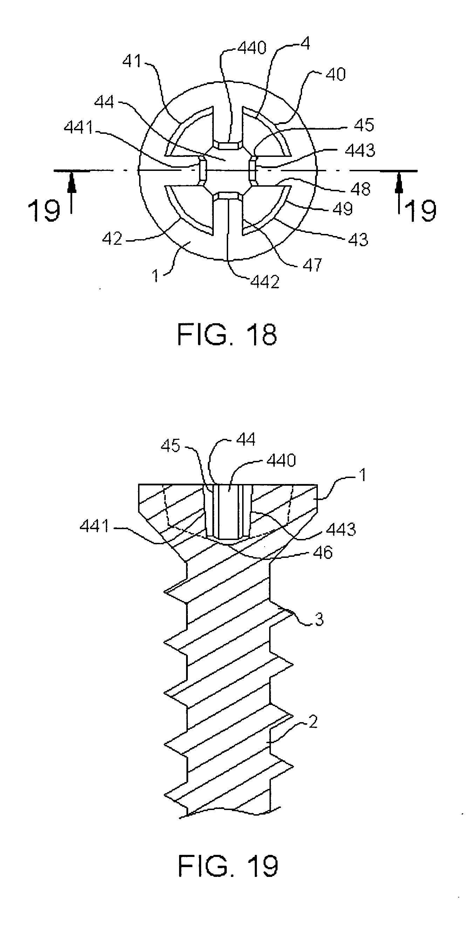

Figure 18 is a top view of the combined-recess driving socket of the present invention.
Figure 19 is a cross-sectional view of line 19--19 in Figure 18.

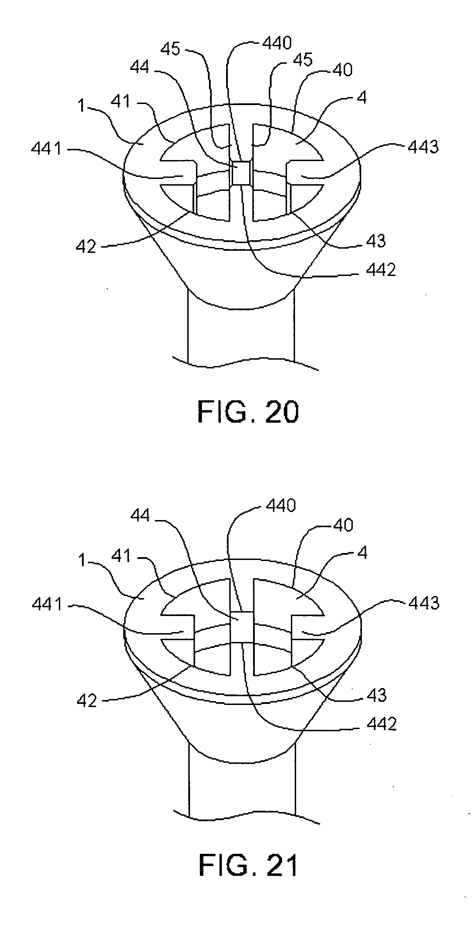

Figure 20 is a perspective view of the combined-recess driving socket of the present invention.
Figure 21 is a perspective view of a no-chamfer-edges combined-recess driving socket of the present invention.

Referring now to Figures 18 and 19, they respectively show a top plane view and a cross-sectional view of a screw according to the present invention. The screw comprises a head body 1, a shank 2 and a driving socket 4. The driving socket 4 is formed on the head body 1 at one end of the shank 2 which includes a male-thread 3. The driving socket 4 comprises a bottom portion 46, a square recess 44 and four symmetrical fan-shaped recesses 40, 41, 42, 43. The bottom portion 46 of the socket, preferably, forms a cone-shape recess (as shown in Figure 19) rather than a plane. The square recess 44 is defined by four substantially vertical walls 440, 441, 442, 443 which taper inwards towards the bottom portion 46 and are separated to one other by four comer gaps respectively as shown in Figure 21. Preferably, each of the vertical walls 440, 441, 442, 443 is chamfered such that eight chamfers 45 are formed between the vertical walls and the fan-shaped portions 40, 41, 42, 43 as shown in Figure 20.

The four fan-shaped recesses 40, 41, 42, 43 extend respectively and outwardly from each of the comer gaps such that each fan-shaped recess is integral with each comer of the square recess 44, and each fan-shaped recess is defined by two outward walls 47, 48 and an outer wall 49 wherein the two outward walls 47, 48 and the outer wall 49 taper toward the bottom portion 46 as shown in Figure 18. In the structure of the screw according to the present invention, the four vertical walls 440, 441, 442, 443 and the outer wall 49 are, preferably, inclined at an angle between 1.5° and 3° with respect to the vertical direction so as to taper towards the bottom portion 46 of the socket, and the two outward walls are, preferably, are substantially vertical.

Figures 6, 8, 10, 12 and 14 show a slot drive bit 50, a square drive bit 51, a Phillips (cross) drive bit 52, a Pozi drive bit 53 and a cross-square drive bit 54 which are all single-purposed. They can only be used properly in its own drive recess type. However, the screw with combined-recess driving socket according to the present invention can be driven by all of the drive bits as shown in Figure 7, 9, 11, 13 and 15. The driving socket 4 of the screw of the present invention fitting with a slot drive bit 50 is shown in Figure 7, with a square drive bit 51 in Figure 9, with a Phillips (cross) drive bit 52 in Figure 11, with a Pozi drive bit 53 in Figure 13 and with a cross-square drive bit 54 in Figure 15.

Further, a tailor-made drive bit 55 shown in Figure 16 can be made and greatly enhance the capacity of withstanding high driving torques and the retention of the drive bit. Figure 17 shows the tailor-made drive bit 55 fitting in the driving socket 4 of the present invention. Conventional screw drive force is applied in a circular direction that makes the pressure not evenly be applied on the recess pressure-receive surface. However, the drive bit tailor made for the present invention applies pressure perpendicularly and evenly on the surfaces of the four projecting blades (between two neighboring fan-shaped portions) with increased contacting areas and four inverse funnel engagement structures such that it not only withstands high driving torques but also helps the drive bit to retain in the drive recess. In other words, the tailor-made driver when applied to the socket of the embodiments of the invention substantially improves the capacity to perform high retention and withstand high driving torques with minimal drive bit slip or cam-out.

While the invention has been described above, it will be recognized and understood that various modifications may be made therein and the appended claims are intended to cover all such modifications which may fall within the scope of the invention.

## Claims

1. A screw with combined-recess driving socket comprising:
a head body (1) having a top surface and a lower end;
a shank (2) attached to the lower end of the head body (1); and
a driving socket (4) formed on the top surface of the head body (1), the socket comprising
a bottom portion (46); wherein the driving socket (4) comprises:
a square recess (44) defined by four substantially vertical walls (440, 441, 442, 443)being separated to one other by four comer gaps respectively, and
four fan-shaped recesses (40, 41, 42, 44)extending outwardly from each of the corner gaps respectively such that each fan-shaped recess (40, 41, 42, 44) is integral with each comer of the square recess (44).

2. The screw as claimed in claim 1, wherein the four substantially vertical walls (440, 441, 442, 443) tapering inwards towards the bottom portion (46).

3. The screw as claimed in claim 1 or 2, wherein each fan-shaped recess (40, 41, 42, 44) being defined by two outward walls (47, 48) and an outer wall wherein the two outward walls (47, 48) and the outer wall taper toward the bottom portion.

4. The screw as claimed in claim 1, 2 or 3, wherein the bottom portion (46) of the socket forms a cone-shape recess.

5. The screw as claimed in any of the preceding claims, wherein ends of the vertical walls (440, 441, 442, 443) are chamfered such that eight chamfers (45) are formed between the vertical walls (440, 441, 442, 443) and the fan-shaped recesses (40, 41, 42, 44).

6. The screw as claimed in claim 2, wherein each of the four vertical walls (440, 441, 442, 443) is inclined at an angle between 1.5° and 3° with respect to the vertical direction so as to taper towards the bottom portion (46) of the socket.

7. The screw as claimed in claim 3, wherein the outer wall (49) is inclined at an angle between 1.5° and 3° with respect to the vertical direction so as to taper towards the bottom portion (46) of the socket.

8. The screw as claimed in claim 3, wherein the two outward walls (47, 48) are substantially vertical.
